# EUROPÄISCHE PATENTSCHRIFT

(11) **EP 2 844 958 B1**
(45) Veröffentlichungstag und Bekanntmachung des Hinweises auf die Patenterteilung: **06.03.2019**
(21) Anmeldenummer: 13770633.9
(22) Anmeldetag: 17.08.2013
(51) Int. Cl.: G01F 1/58, G01F 1/60

(54) **MAGNETISCH-INDUKTIVES DURCHFLUSSMESSGERÄT**
MAGNETIC-INDUCTIVE FLOWMETER
APPAREIL DE MESURE DE DÉBIT À INDUCTION MAGNÉTIQUE

(30) Priorität: 21.08.2012 DE 102012016408
(43) Veröffentlichungstag der Anmeldung: 11.03.2015
(73) Patentinhaber: Krohne AG, 4019 Basel (CH)
(72) Erfinder: HEIJNSDIJK, Alexander, NL-3356 BW Papendrecht (NL); NEVEN, Joseph, FR-26540 Mours St. Eusèbe (FR); VAN WILLIGEN, Arnoud, NL-2091 KC Capelle a/d (NL)
(74) Vertreter: Gesthuysen Patent- und Rechtsanwälte
(86) Internationale Anmeldenummer: PCT/EP2013/002478
(87) Internationale Veröffentlichungsnummer: WO 2014/029485

(56) Entgegenhaltungen:
- EP-A1- 0 548 439
- EP-A1- 2 169 360
- WO-A1-97/41407
- DE-A1- 19 535 997
- DE-A1-102004 014 295
- DE-B- 1 162 587
- US-A- 2 893 243
- US-A- 5 207 105
- US-A1- 2001 002 553
- US-A1- 2005 268 730
- US-A1- 2012 037 729

## Beschreibung

Die Erfindung betrifft ein magnetisch-induktives Durchflussmessgerät, mit einer Mehrzahl von Funktionseinheiten und mit einem allen Funktionseinheiten gemeinsamen Gehäuse, wobei jede Funktionseinheit zumindest ein Messrohr für den Durchfluss eines elektrisch leitenden Mediums, eine eine Feldspule aufweisende Magnetfelderzeugungseinrichtung zur Erzeugung eines zumindest auch senkrecht zur Längsachse des Messrohrs verlaufenden Magnetfeldes und mindestens zwei Messelektroden aufweist und wobei die virtuelle Verbindungslinie der beiden Messelektroden zumindest im Wesentlichen senkrecht zur Richtung des das Messrohr senkrecht zur Längsachse des Messrohrs durchsetzenden Magnetfeldes verläuft. Dabei ist im Gehäuse für die Messrohre aller Funktionseinheiten ein gemeinsamer Mediumszuflussanschluss oder ein gemeinsamer Mediumsabflussanschluss verwirklicht und/oder ist für die Magnetfelderzeugungseinrichtungen aller Funktionseinheiten eine gemeinsame Stromversorgung verwirklicht und/oder ist für die Messelektroden aller Funktionseinheiten eine gemeinsame Auswerteeinheit verwirklicht.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing. K.W. Bonfig, 3. Auflage, Vulkan-Verlag Essen, 2002, Seiten 123 bis 167, und auch auf die Literaturstelle "Grundlagen Magnetisch-Induktive Durchflussmessung" von Dipl.-Ing. Friedrich Hoffmann, 3. Auflage, 2003, Druckschrift der Firma KROHNE Messtechnik GmbH & Co. KG, verwiesen.

Das grundlegende Prinzip eines magnetisch-induktiven Durchflussmessgeräts zur Durchflussmessung eines strömenden Mediums geht auf Michael Faraday zurück, der bereits im Jahre 1832 vorgeschlagen hat, das Prinzip der elektromagnetischen Induktion zur Messung der Strömungsgeschwindigkeit eines elektrisch leitfähigen Mediums anzuwenden.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die mindestens eine Magnetfeldspule, üblicherweise zwei Magnetfeldspulen aufweist, ein während des Messvorgangs sich zeitlich veränderndes Magnetfeld erzeugt wird und das Magnetfeld wenigstens teilweise das durch ein Messrohr strömende elektrisch leitfähige Medium durchsetzt. Dabei weist das erzeugte Magnetfeld wenigstens eine Komponente senkrecht zur Längsachse des Messrohrs bzw. senkrecht zur Strömungsrichtung des Mediums auf.

Wenn es einleitend heißt, dass jede Funktionseinheit eine Magnetfelderzeugungseinrichtung zur Erzeugung eines zumindest auch senkrecht zur Längsachse des Messrohrs verlaufenden Magnetfeldes aufweist, dann sei hier noch einmal darauf hingewiesen, dass das Magnetfeld zwar vorzugsweise senkrecht zur Längsachse des Messrohrs bzw. senkrecht zur Strömungsrichtung des Mediums verläuft, ausreichend jedoch ist, dass eine Komponente des Magnetfeldes senkrecht zur Längsachse des Messrohrs bzw. senkrecht zur Strömungsrichtung des Mediums verläuft.

Eingangs ist ausgeführt worden, dass zu jeder Funktionseinheit mindestens zwei Messelektroden gehören, wobei die virtuelle Verbindungslinie der beiden Messelektroden zumindest im Wesentlichen senkrecht zur Richtung des das Messrohr durchsetzenden Magnetfeldes verläuft. Vorzugsweise verläuft die virtuelle Verbindungslinie der beiden Messelektroden tatsächlich - mehr oder weniger - senkrecht zur Richtung des das Magnetfeld durchsetzenden Magnetfeldes.

Die durch Induktion im strömenden, elektrisch leitfähigen Medium erzeugte elektrische Feldstärke kann durch direkt, also galvanisch mit dem Medium in Kontakt stehende Messelektroden als elektrische Spannung gemessen werden oder auch von nicht direkt, also nicht galvanisch mit dem Medium in Kontakt stehenden Elektroden kapazitiv detektiert werden. Aus der gemessenen Spannung wird dann der Durchfluss des strömenden Mediums durch das Messrohr abgeleitet.

Der Messfehler bei im Stand der Technik bekannten magnetisch-induktiven Durchflussmessgeräten ist heute relativ klein, ein Messfehler kleiner als 0,2 % kann realisiert werden.

Zu bekannten magnetisch-induktiven Durchflussmessgeräten wird beispielhaft auf die deutschen Offenlegungsschriften 197 08 857, 10 2004 063 617, 10 2008 057 755 und 10 2008 057 756 verwiesen. Der Offenbarungsgehalt dieser vorveröffentlichen Druckschriften wird hiermit ausdrücklich auch zum Offenbarungsgehalt der hier vorliegenden Patentanmeldung gemacht.

In einer Vielzahl von Anwendungen ist es erforderlich, mehrere magnetisch-induktive Durchflussmessgeräte benachbart zueinander anzuordnen und zu betreiben.

Ein erstes und ein zweites magnetisch-induktives Durchflussmessgerät sind für die folgenden Betrachtungen dann benachbart, wenn wenigstens das von der Magnetfelderzeugungseinrichtung des ersten Durchflussmessgeräts erzeugte Magnetfeld das Messrohr des zweiten Durchflussmessgeräts zumindest teilweise durchsetzt. Selbstverständlich ist eine benachbarte Anordnung nicht auf zwei Durchflussmessgeräte begrenzt.

Oftmals ist es nicht möglich, beispielsweise bei begrenztem räumlichen Verhältnissen, den räumlichen Abstand von magnetisch-induktiven Durchflussmessgeräten so groß zu wählen, dass sie nicht benachbart sind. Eine Abschirmung der Durchflussmessgeräte wäre mit zusätzlichen Kosten und Aufwand verbunden.

Führen das erste Durchflussmessgerät und das zweite Durchflussmessgerät im Betrieb Messvorgänge durch, so ist unbekannt zum einen, ob sich die Messvorgänge der beiden benachbarten Durchflussmessgeräte zeitlich überlappen, und zum anderen, wie groß im Fall einer zeitlichen Überlappung die im Allgemeinen nicht konstante zeitliche Überlappung ist.

Wird eine zeitliche Überlappung der Messvorgänge der beiden benachbarten Durchflussmessgeräte angenommen, so überlagern sich im Messrohr des zweiten Durchflussmessgeräts das von der Magnetfelderzeugungseinrichtung des zweiten Durchflussmessgeräts erzeugte Magnetfeld und das sich bis zum Messrohr des zweiten Durchflussmessgeräts erstreckende, von der Magnetfelderzeugungseinrichtung des ersten Durchflussmessgeräts erzeugte Magnetfeld. Die Überlagerung der beiden Magnetfelder hat eine auf unbekannte Weise variierende induzierte elektrische Spannung und eine entsprechende Beeinflussung der Durchflussmessungen zur Folge, was eine Reduktion der Messqualität bedeutet. So kann beispielsweise bei konstantem Durchfluss durch das Messrohr eines Durchflussmessgeräts ein variierender Durchfluss von dem Durchflussmessgerät angezeigt werden. Selbstverständlich beeinflusst auch der Messvorgang des zweiten Durchflussmessgeräts den gemessenen Wert des Durchflusses des ersten Durchflussmessgeräts.

Mit dem Problem der Verbesserung der Messqualität bei benachbart angeordneten magnetisch-induktiven Durchflussmessgeräten und einer verbesserten Anordnung benachbarter magnetisch-induktiver Durchflussmessgeräte befasst sich bereits die am 9. September 2011 durchgeführte, also nicht zum Stand der Technik gehörende deutsche Patentanmeldung 10 2011 112 763.5. Diese Patentanmeldung lehrt verfahrensmäßig, zur Vermeidung von Variationen von gegenseitigen Beeinflussungen der Durchflussmessungen durch die Magnetfelder benachbarter magnetisch-induktiver Durchflussmessgeräte Messvorgänge einzelner benachbarter Durchflussmessgeräte zu synchronisieren.

Nach dem, was einleitend ausgeführt worden ist, geht es vorliegend nicht um räumlich getrennte, jedoch benachbart angeordnete magnetisch-induktive Durchflussmessgeräte, geht es vielmehr um ein magnetisch-induktives Durchflussmessgerät mit einer Mehrzahl von Funktionseinheiten und mit einem allen Funktionseinheiten gemeinsamen Gehäuse. Es geht also um mehrere magnetisch-induktive Durchflussmessgeräte, die insoweit nicht räumlich getrennt sind, als sie ein gemeinsames Gehäuse aufweisen. Ein solches Durchflussmessgerät wird von der Firma Kirchgaesser Industrie Elektronik GmbH unter der Bezeichnung "MULTIMIDEX" hergestellt und vertrieben.

Eine Anordnung mit mehreren magnetisch-induktiven Durchflussmessgeräten, die Teil eines Messsystems sind, offenbart die EP 2 169 360 A1.

Eine Ausgestaltung eines magnetisch-induktiven Durchflussmessgeräts, bei dem Polschuhe Verwendung finden, offenbart die US 2,893,243.

Der Erfindung liegt die Aufgabe zugrunde, ein magnetisch-induktives Durchflussmessgerät der eingangs beschriebenen Art anzugeben, das relativ einfach aufgebaut ist und einfach hergestellt werden kann.

Die der Erfindung zugrunde liegende Aufgabe ist zunächst und im Wesentlichen dadurch gelöst, dass sich an die Feldspule beidseitig jeweils ein senkrecht zur Spulenachse verlaufendes Magnetfeldführungsteil anschließt, dass die Magnetfeldführungsteile an ihren der Feldspule fernen Enden jeweils einen Polschuh aufweisen, die beiden Polschuhe aufeinander gerichtet sind und zwischen den beiden Polschuhen das Messrohr verläuft, und dass innerhalb eines Polschuhs ein Kanal für die Durchführung einer zu einer Messelektrode führenden Anschlussleitung vorgesehen ist.

Weist die Feldspule, wie üblich, einen Spulenkern aus einem magnetisch gut leitenden Material auf, dann bietet es sich an, konstruktiv dafür zu sorgen, dass sich die Magnetfeldführungsteile an den Spulenkern anschließen.

Es empfiehlt sich, den Durchmesser der Polschuhe größer zu wählen als der Durchmesser des Messrohres ist, was zwei Vorteile hat. Einerseits ist in der Ebene senkrecht zur Längsachse des Messrohrs, also in der Ebene, in der die Messelektroden vorgesehen sind, die durchschnittliche magnetische Induktion größer. Andererseits hat das magnetische Feld in Längsrichtung des Messrohrs eine größere Ausdehnung.

Durch einen Kanal innerhalb eines Polschuhs können die Anschlussleitungen für beide Messelektroden geführt sein. Es kann jedoch auch in jedem Polschuh ein Kanal für die Durchführung einer zu einer Messelektrode führenden Anschlussleitung realisiert sein. Jedenfalls empfiehlt es sich, den zuvor erläuterten Kanal bzw. die Kanäle über einen spitzen Winkel zur Polschuhachse verlaufen zu lassen.

Bei der bevorzugten Ausführungsform eines erfindungsgemäßen magnetisch-induktiven Durchflussmessgeräts, bei der die Magnetfeldführungsteile an ihren den Feldspulen fernen Enden jeweils einen Polschuh aufweisen, empfiehlt es sich, das Messrohr beidseitig mit jeweils einer den Polschuhen zugeordneten Polschuhkammer zu versehen. Solche Polschuhkammern ermöglichen es, während des Zusammenbaus des erfindungsgemäßen magnetisch-induktiven Durchflussmessgeräts die Magnetfeldführungsteile mit den daran vorgesehenen Polschuhen relativ zum Messrohr in einfacher weise richtig auszurichten, und nach dem Zusammenbau sind die Magnetfeldführungsteile mit den daran vorgesehene Polschuhen in Bezug auf das Messrohr richtig positioniert und fixiert. Das kann noch dadurch verbessert werden, dass die Polschuhe und die Polschuhkammern einander entsprechende Ausrichtungs- und Rastelemente aufweisen.

Schließlich kann es vorteilhaft sein, zumindest einseitig eine der Feldspule zugeordnete Abschlussscheibe vorzusehen und die Abschlussscheibe mit einer Nut zur Führung und Fixierung der der Feldspule zugeordneten Anschlussleitung zu versehen.

Im Einzelnen gibt es nun verschiedene Möglichkeiten, das erfindungsgemäße magnetisch-induktive Durchflussmessgerät auszugestalten und weiterzubilden. Dazu wird verwiesen einerseits auf die dem Patentanspruch 1 nachgeordneten Patentansprüche, andererseits auf das nachfolgend beschriebene, in der Zeichnung nur sehr schematisch dargestellte Ausführungsbeispiel. In der Zeichnung zeigen
- Fig. 1: sehr schematisch, den grundsätzlichen Aufbau eines magnetischinduktiven Durchflussmessgeräts,
- Fig. 2: wiederum sehr schematisch, ein magnetisch-induktives Durchflussmessgerät mit einer Mehrzahl von Funktionseinheiten,
- Fig. 3: ein weiteres Mal sehr schematisch, ein erstes Detail aus einer erstes Detail aus einer bevorzugten Ausführungsform eines erfindungsgemäßen magnetisch-induktiven Durchflussmessgeräts,
- Fig. 4: nochmals sehr schematisch, ein zweites Detail aus einer bevorzugten Ausführungsform eines erfindungsgemäßen magnetischinduktiven Durchflussmessgeräts,
- Fig. 5: eine bevorzugte Ausführungsform einer Magnetfelderzeugungseinrichtung eines erfindungsgemäßen magnetisch-induktiven Durchflussmessgeräts,
- Fig. 6: den Gegenstand nach Fig. 5, ohne die Feldspule und ohne das Messrohr,
- Fig. 7: eine Seitenansicht des Gegenstands nach Fig. 5, wobei das vordere Magnetfeldführungsteil entfernt ist,
- Fig. 8: den Gegenstand nach Fig. 7, von oben gesehen, und
- Fig. 9: eine besondere Ausgestaltung eines Polschuhs einer Magnetfelderzeugungseinrichtung eines erfindungsgemäßen magnetischinduktiven Durchflussmessgeräts.

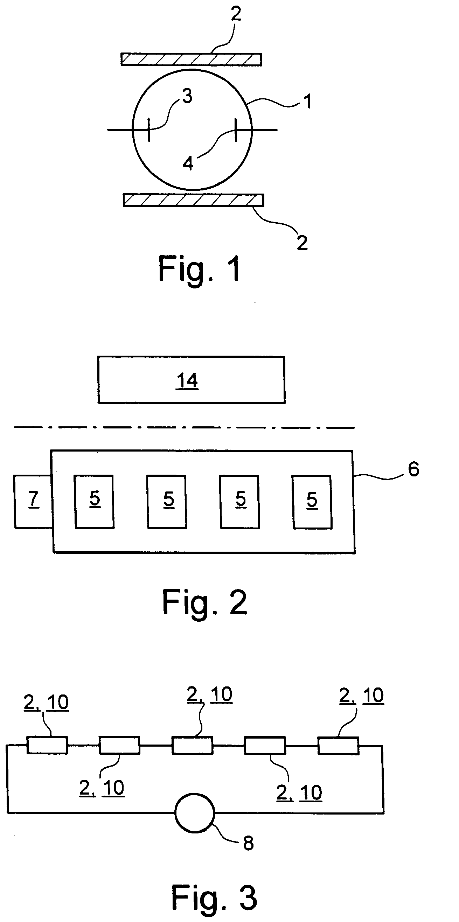

Die Figuren zeigen ein magnetisch-induktives Durchflussmessgerät, zu dem grundsätzlich, wie in der Fig. 1 angedeutet, ein Messrohr 1 für den Durchfluss eines elektrisch leitenden Mediums, eine Magnetfelderzeugungseinrichtung 2 zur Erzeugung eines senkrecht zur Längsachse des Messrohrs 1 verlaufenden Magnetfeldes und mindestens zwei Messelektroden 3, 4 gehören, wobei die virtuelle Verbindungslinie der beiden Messelektroden 3, 4 zumindest im Wesentlichen senkrecht zur Richtung des das Messrohr 1 senkrecht zur Längsachse des Messrohrs 1 durchsetzenden Magnetfeldes verläuft.

In der Fig. 2 ist angedeutet, dass das in Rede stehende magnetisch-induktive Durchflussmessgerät eine Mehrzahl von Funktionseinheiten 5 und ein allen Funktionseinheiten 5 gemeinsames Gehäuse 6 aufweist, wobei jede Funktionseinheit 5 so ausgeführt ist, wie das zuvor in Verbindung mit der Fig. 1 für den grundsätzlichen Aufbau magnetisch-induktiver Durchflussmessgeräte ausgeführt worden ist.

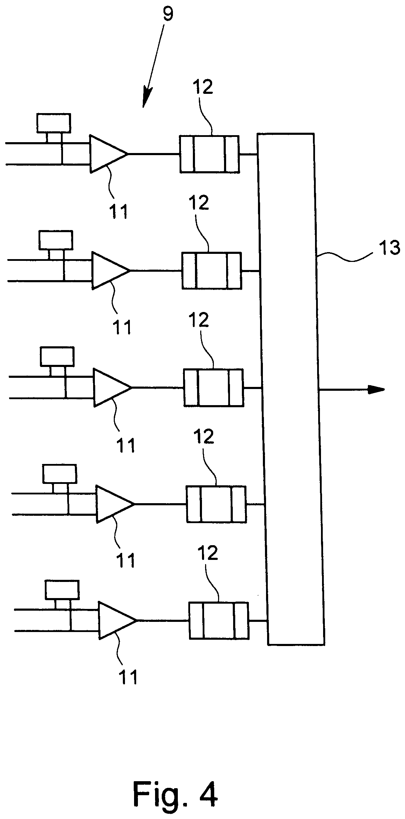

Angedeutet ist in der Fig. 2, dass für das dargestellte magnetisch-induktive Durchflussmessgerät gilt, dass im Gehäuse 6 für die Messrohre 1 aller Funktionseinheiten 5 ein gemeinsamer Mediumszuflussanschluss 7 verwirklicht ist. Demgegenüber ist in der Fig. 3 angedeutet, dass im Gehäuse 6 für die Magnetfelderzeugungseinrichtungen 2 aller Funktionseinheiten 5 eine gemeinsame Stromversorgung 8 verwirklicht ist. In der Fig. 4 ist schließlich angedeutet, dass im Gehäuse 6 für die Messelektroden 3, 4 aller Funktionseinheiten 5 eine gemeinsame Auswerteeinheit 9 verwirklicht ist.

In der Fig. 1, die sehr schematisch den grundsätzlichen Aufbau magnetisch-induktiver Durchflussmessgeräte zeigt, sind die Magnetfelderzeugungseinrichtungen 2 auch nur schematisch angedeutet. Demgegenüber soll der Fig. 3 entnommen werden können, dass die Magnetfelderzeugungseinrichtungen 2 aller Funktionseinheiten 5 mindestens eine Feldspule 10 aufweisen. Ohne weiteres ist erkennbar, dass die Feldspulen 10 aller Funktionseinheiten in Reihe geschaltet sind.

Nicht dargestellt ist, dass die Auswerteeinheit 9 vorzugsweise so ausgeführt ist, dass die an den Messelektroden 3, 4 der einzelnen Funktionseinheiten 5 entstehenden Elektrodenspannungen separat, aber parallel, d. h. in für alle Funktionseinheiten 5 gleichen Messphasen, gemessen werden.

Die Fig. 4 zeigt Einzelheiten in Bezug auf die Auswerteeinheit 9, die für die Messelektroden 3, 4 aller Funktionseinheiten 5 gemeinsam verwirklicht ist. Im Einzelnen gehören zunächst zu den zu den einzelnen Funktionseinheiten 5 gehörenden Messelektroden 3, 4 jeweils ein eigener Vorverstärker 11. Außerdem ist den zu den einzelnen Funktionseinheiten 5 gehörenden Messelektroden 3, 4 jeweils ein eigener A/D-Wandler 12 nachgeschaltet. Im Einzelnen sind die A/D-Wandler 12 den Vorverstärkern 11 nachgeschaltet. In der Fig. 4 ist schließlich noch angedeutet, dass die Auswerteeinheit 9 eine außen liegende digitale Bus-Schnittstelle 13 aufweist.

Erfindungsgemäße magnetisch-induktive Durchflussmessgeräte sollen vorzugsweise bei Maschinen eingesetzt werden können, z. B. bei Reinigungsmaschinen, bei denen Wasser, jedenfalls Feuchtigkeit, auftreten kann, jedenfalls in bestimmten Bereichen solcher Maschinen. Darum wird bei den erfindungsgemäßen magnetisch-induktiven Durchflussmessgeräten das Gehäuse 6 vorzugsweise als IP-66-Gehäuse, als IP-67-Gehäuse oder als IP-68-Gehäuse realisiert. In Verbindung damit, oder auch stattdessen, wird bei erfindungsgemäßen magnetisch-induktiven Durchflussmessgeräten mit Niederspannung gearbeitet, also der Anschluss an die Netzspannung, üblicherweise 230 V Wechselspannung, über ein separates Netzteil 14, wie in Fig. 2 angedeutet, vorgenommen.

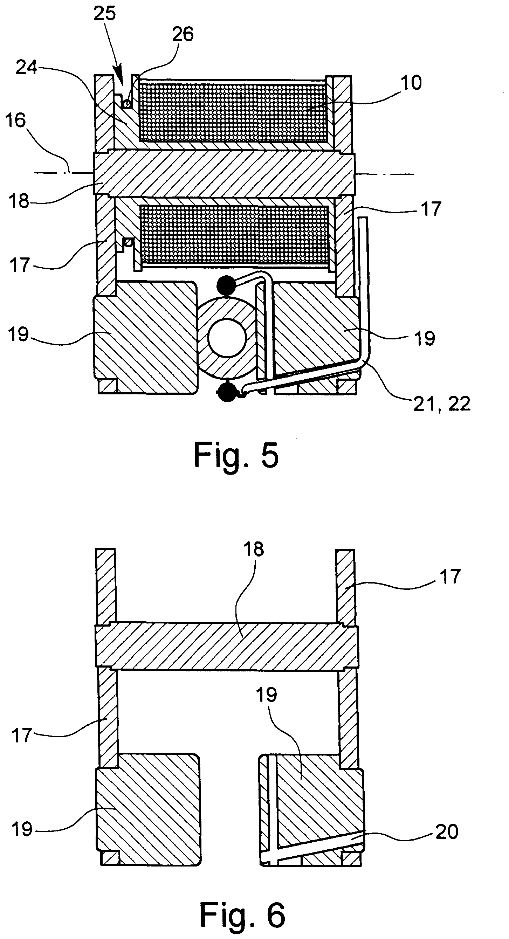

Besondere Ausgestaltungen und Weiterbildungen des bisher beschriebenen magnetisch-induktiven Durchflussmessgeräts zeigen die Figuren 5 bis 9, nämlich in Verbindung mit magnetisch-induktiven Durchflussmessgeräten, bei denen die Magnetfelderzeugungseinrichtung 2, wie durchaus üblich, eine Feldspule 10 aufweisen.

Wie insbesondere die Fig. 5 zeigt, schließt sich beidseitig an die Feldspule 10 jeweils ein senkrecht zur Spulenachse 16 ausgerichtetes Magnetfeldführungsteil 17 an. Wie auch üblich, weist die Feldspule 10 einen Spulenkern 18 aus einem magnetisch gut leitenden Material auf. Dabei ist konstruktiv dafür gesorgt, dass sich die Magnetfeldführungsteile 17 an den Spulenkern 18 anschließen.

Für die bevorzugte Ausführungsform eines magnetisch-induktiven Durchflussmessgeräts gilt auch, wie die Fig. 5 zeigt, dass Polschuhe 19 verwirklicht sind. Im Einzelnen gilt dabei, dass die Magnetfeldführungsteile 17 an ihren der Feldspule 10 fernen Enden jeweils einen Polschuh 19 aufweisen, die beiden Polschuhe 19 aufeinander gerichtet sind und zwischen den beiden Polschuhen 19 das Messrohr 1 verläuft.

In der Fig. 5 ist im Übrigen erkennbar, dass der Durchmesser der Polschuhe 19 größer ist als der Durchmesser des Messrohrs 1. Dadurch sind zwei Vorteile realisiert. Einerseits ist nämlich in der Ebene senkrecht zur Längsachse des Messrohrs 1, also in der Ebene, in der die Messelektroden 3, 4 vorgesehen sind, die durchschnittliche magnetische Induktion größer. Andererseits hat das magnetische Feld in Längsrichtung des Messrohrs eine größere Ausdehnung.

Die Fig. 6 zeigt den Gegenstand nach Fig. 5, jedoch ohne die Feldspule 10 und ohne das Messrohr 1.

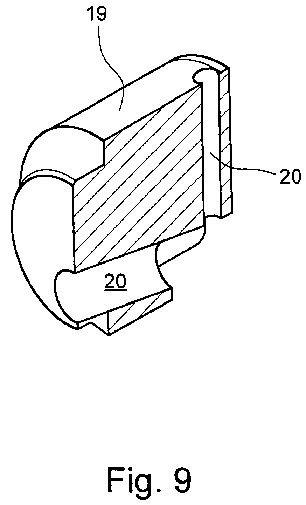

Wie auch die Fig. 5 und 6 zeigen, aber insbesondere die Fig. 9 zeigt, ist innerhalb eines Polschuhs 19 ein Kanal 20 für die Durchführung der zu den Messelektroden 3, 4 führenden Anschlussleitungen 21, 22 verwirklicht. Dieser Kanal 20 verläuft unter einem spitzen Winkel zur nicht eingezeichneten Polschuhachse.

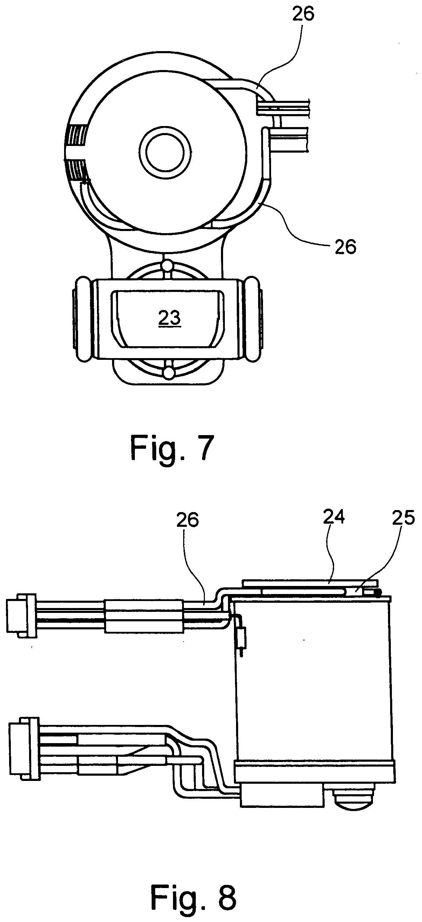

Im dargestellten Ausführungsbeispiel ist, wie in Fig. 7 angedeutet, das Messrohr 1 mit einer den Polschuhen 19 zugeordneten Polschuhkammer 23 versehen. Nicht dargestellt ist, dass die Polschuhe 19 und die Polschuhkammern 23 einander entsprechende Ausrichtungs- und Rastelemente aufweisen können.

Schließlich gilt für das dargestellte Ausführungsbeispiel, was insbesondere den Fig. 5, 7 und 8 entnommen werden kann, dass einseitig eine der Feldspule 10 zugeordnete Abschlussscheibe 24 vorgesehen ist und die Abschlussscheibe mit einer Nut 25 zur Führung und Fixierung der der Feldspule 10 zugeordneten Anschlussleitung 26 versehen ist.

## Patentansprüche

1. Magnetisch-induktives Durchflussmessgerät, mit einer Mehrzahl von Funktionseinheiten (5) und mit einem allen Funktionseinheiten (5) gemeinsamen Gehäuse (6), wobei jede Funktionseinheit (5) zumindest ein Messrohr (1) für den Durchfluss eines elektrisch leitenden Mediums, eine eine Feldspule (10) aufweisende Magnetfelderzeugungseinrichtung (2) zur Erzeugung eines zumindest auch senkrecht zur Längsachse des Messrohrs (1) verlaufenden Magnetfeldes und mindestens zwei Messelektroden (3, 4) aufweist und wobei die virtuelle Verbindungslinie der beiden Messelektroden (3, 4) zumindest im Wesentlichen senkrecht zur Richtung des das Messrohr (1) senkrecht zur Längsachse des Messrohrs (1) durchsetzenden Magnetfeldes verläuft, und wobei im Gehäuse (6) für die Messrohre (1) aller Funktionseinheiten (5) ein gemeinsamer Mediumszuflussanschluss (7) oder ein gemeinsamer Mediumsabflussanschluss und/oder für die Magnetfelderzeugungseinrichtungen (2) aller Funktionseinheiten (5) eine gemeinsame Stromversorgung (8) und/oder für die Messelektroden (3, 4) aller Funktionseinheiten (5) eine gemeinsame Auswerteeinheit (9) verwirklicht sind bzw. ist,
**dadurch gekennzeichnet,**
**dass** sich an die Feldspule (10) beidseitig jeweils ein senkrecht zur Spulenachse (16) verlaufendes Magnetfeldführungsteil (17) anschließt, dass die Magnetfeldführungsteile (17) an ihren der Feldspule (10) fernen Enden jeweils einen Polschuh (19) aufweisen, die beiden Polschuhe (19) aufeinander gerichtet sind und zwischen den beiden Polschuhen (19) das Messrohr (1) verläuft, und dass innerhalb eines Polschuhs (19) ein Kanal (20) für die Durchführung einer zu einer Messelektrode (3, 4) führenden Anschlussleitung (21, 22) vorgesehen ist.

2. Magnetisch-induktives Durchflussmessgerät nach Anspruch 1, **dadurch gekennzeichnet, dass** die Feldspule (10) einen Spulenkern (18) aus einem magnetisch gut leitenden Material aufweist und dass sich die Magnetfeldführungsteile (17) an den Spulenkern (18) anschließen.

3. Magnetisch-induktives Durchflussmessgerät nach Anspruch 1 oder 2, **dadurch gekennzeichnet, dass** der Durchmesser der Polschuhe (19) größer ist als der Durchmesser des Messrohrs (1).

4. Magnetisch-induktives Durchflussmessgerät nach einem der Ansprüche 1 bis 3, **dadurch gekennzeichnet, dass** der Kanal (20) unter einem spitzen Winkel zur Polschuhachse verläuft.

5. Magnetisch-induktives Durchflussmessgerät nach einem der Ansprüche 1 bis 4, **dadurch gekennzeichnet, dass** das Messrohr (1) beidseitig mit jeweils einer den Polschuhen (19) zugeordneten Polschuhkammer (23) versehen ist.

6. Magnetisch-induktives Durchflussmessgerät nach Anspruch 5, **dadurch gekennzeichnet, dass** die Polschuhe (19) und die Polschuhkammer (23) einander entsprechende Ausrichtungs- und Rastklemmelemente aufweisen.

7. Magnetisch-induktives Durchflussmessgerät nach einem der Ansprüche 1 bis 6, **dadurch gekennzeichnet, dass** zumindest einseitig eine der Feldspule (10) zugeordnete Abschlussscheibe (24) vorgesehen ist und die Abschlussscheibe (24) mit einer Nut (25) zur Führung und Fixierung der der Feldspule (10) zugeordneten Anschlussleitung (26) versehen ist.

## Claims

1. Magnetic-inductive flow meter, with a plurality of functional units (5) and with a housing (6) which is common to all functional units (5), wherein each functional unit has at least one measuring tube for the flow of an electrically conductive medium, a magnetic field generating apparatus (2) having a field coil (10) for generating a magnetic field which runs at least also perpendicular to the longitudinal axis of the measuring tube (1), and at least two measuring electrodes (3, 4), and wherein the virtual connecting line of the two measuring electrodes (3, 4) runs at least essentially perpendicular to the direction of the magnetic field permeating the measuring tube (1) perpendicular to the longitudinal axis of the measuring tube, and wherein in the housing (6) for the measuring tubes (1) of all functional units (5), a common medium inflow connection (7) or a common medium outflow connection is implemented and/or for the magnetic field generating apparatus (2) of all functional units (5), a common power supply (8) is implemented and/or for the measuring electrodes (3, 4) of all functional units (5), a common evaluation unit (9) is implemented,
**characterized in**
**that** the field coil (10) is connected on either side to one magnetic field guidance part (17) which runs perpendicular to the coil axis (16), that the magnetic field guidance parts (17) on their ends away from the field coil (10) each have one pole shoe (19), the two pole shoes (19) are aligned to one another and the measuring tube (1) runs between the two pole shoes (19), and that within one pole shoe (19), there is one channel (20) for the penetration of a connecting line (21, 22) which leads to a measuring electrode (3, 4).

2. Magnetic-inductive flow meter according to claim 1, **characterized in that** the field coil (10) has a coil core (18) of a material with good magnetic conductivity and that the magnetic field guidance parts (17) are connected to the coil core (18).

3. Magnetic-inductive flow meter according to claim 1 or 2, **characterized in that** the diameter of the pole shoes (19) is greater than the diameter of the measuring tube (1).

4. Magnetic-inductive flow meter according to any one of claims 1 to 3, **characterized in that** channel (20) runs at an acute angle to the axis of pole shoe.

5. Magnetic-inductive flow meter according to any one of claims 1 to 4, **characterized in that** the measuring tube (1) is provided on either side with one pole shoe chamber (23) which is assigned to the pole shoes (19).

6. Magnetic-inductive flow meter according to claim 5, **characterized in that** the pole shoes (19) and the pole shoe chambers (23) have alignment and latching elements which correspond to one another.

7. Magnetic-inductive flow meter according to any one of claims 1 to 6, **characterized in that** at least on one side there is a terminating disk (24) which is assigned to the field coil (10) and the terminating disk (24) is provided with a groove (25) for guiding and fixing the connecting line (26) which is assigned to the field coil (10).

## Revendications

1. Débitmètre magnéto-inductif, comprenant une pluralité d'unités fonctionnelles (5) et comprenant un boîtier (6) commun à toutes les unités fonctionnelles (5), chaque unité fonctionnelle (5) possédant au moins un tube de mesure (1) pour le débit d'un fluide électriquement conducteur, un dispositif de génération de champ magnétique (2) possédant une bobine de champ (10) et destiné à générer un champ magnétique qui s'étend au moins également perpendiculairement à l'axe longitudinal du tube de mesure (1), et au moins deux électrodes de mesure (3, 4) et la ligne de liaison virtuelle des deux électrodes de mesure (3, 4) s'étendant au moins sensiblement perpendiculairement à la direction du champ magnétique qui traverse le tube de mesure (1) perpendiculairement à l'axe longitudinal du tube de mesure (1), et un raccord d'afflux de fluide commun (7) ou un raccord d'évacuation de fluide commun pour les tubes de mesure (1) de toutes les unités fonctionnelles (5) et/ou une alimentation électrique commune (8) pour les dispositifs de génération de champ magnétique (2) de toutes les unités fonctionnelles (5) et/ou une unité d'interprétation commune (9) pour les électrodes de mesure (3, 4) de toutes les unités fonctionnelles (5) étant réalisé(s) dans le boîtier (6),
**caractérisé en ce**
**qu'**une partie de guidage de champ magnétique (17) qui s'étend perpendiculairement à l'axe de bobine (16) se raccorde respectivement des deux côtés à la bobine de champ (10), en ce que les parties de guidage de champ magnétique (17) possèdent respectivement une pièce polaire (19) à leurs extrémités distantes de la bobine de champ (10), les deux pièces polaires (19) sont orientées l'une vers l'autre et le tube de mesure (1) s'étend entre les pièces polaires (19), et en ce qu'à l'intérieur d'une pièce polaire (19) se trouve un canal (20) pour le passage d'une ligne de raccordement (21, 22) qui mène à une électrode de mesure (3, 4).

2. Débitmètre magnéto-inductif selon la revendication 1, **caractérisé en ce que** la bobine de champ (10) possède un noyau de bobine (18) en un matériau bon conducteur magnétique et **en ce que** les parties de guidage de champ magnétique (17) se raccordement au noyau de bobine (18).

3. Débitmètre magnéto-inductif selon la revendication 1 ou 2, **caractérisé en ce que** le diamètre de la pièce polaire (19) est supérieur au diamètre du tube de mesure (1).

4. Débitmètre magnéto-inductif selon l'une des revendications 1 à 3, **caractérisé en ce que** le canal (20) s'étend sous un angle aigu par rapport à l'axe de la pièce polaire.

5. Débitmètre magnéto-inductif selon l'une des revendications 1 à 4, **caractérisé en ce que** le tube de mesure (1) est pourvu des deux côtés d'une chambre de pièce polaire (23) respectivement associée à l'une des pièces polaires (19).

6. Débitmètre magnéto-inductif selon la revendication 5, **caractérisé en ce que** les pièces polaires (19) et les chambres de pièce polaire (23) possèdent des éléments d'orientation et d'encliquetage correspondant les uns aux autres.

7. Débitmètre magnéto-inductif selon l'une des revendications 1 à 6, **caractérisé en ce qu'**une plaque de terminaison (24) associée à la bobine de champ (10) se trouve au moins d'un côté et la plaque de terminaison (24) est pourvue d'une rainure (25) servant au guidage et la fixation de la ligne de raccordement (26) associée à la bobine de champ (10).
